# EUROPEAN PATENT APPLICATION

(11) **EP 3 653 093 A1**
(43) Date of publication of application: **20.05.2020**
(21) Application number: 18205911.3
(22) Date of filing: 13.11.2018
(51) Int. Cl.: A47J 43/07, G10L 15/22, G06K 9/00, G10L 15/28, F25D 23/00, G08B 13/08, H01H 13/18

(54) **VOICE CONTROL SYSTEM FOR A DOMESTIC APPLIANCE, PARTICULARLY FOR A COOKING APPLIANCE**

(71) Applicant: ELECTROLUX APPLIANCES AKTIEBOLAG, 105 45 Stockholm (SE)
(72) Inventor: PAULI, Georg, 91541 Rothenburg o.d.T (DE); NEGRETTI, Peter, 47100 Forli (IT)
(74) Representative: Electrolux Group Patents

(57) **Abstract**

The present invention relates to a voice control system (10) for a domestic appliance, particularly for a cooking appliance. The voice control system (10) comprises at least one microphone (18) for receiving speech signals. The voice control system (10) comprises at least one sound recognition device (12) connected to said microphone (18) and provided for recognising and evaluating said speech signals. The voice control system (10) comprises at least one control unit for controlling the domestic appliance. The voice control system (10) comprises at least one sensor (20, 22) for detecting signals arising from the behaviour of the user. The microphone (18) is activatable or activated by at least one signal from the sensor (20, 22), if said signal conforms with the behaviour pattern of the user.

## Description

The present invention relates to a voice control system for a domestic appliance, particularly for a cooking appliance. Further, the present invention relates to a domestic appliance, particularly for a cooking appliance. Moreover, the present invention relates to a set of domestic appliances, particularly a set of kitchen appliances.

A voice control system for a domestic appliance may use a known voice recognition system like Alexa or Google Home. Said voice recognition systems give answers to questions of the user. Alexa and Google Home are activatable by the human voice. However, further kinds of activating the voice recognition system are not provided. It would be advantageous to have more ways of interacting with the voice control system.

It is an object of the present invention to provide a voice control system for a domestic appliance, which allows several ways of interaction between said voice control system and the real user.

The object is achieved by the voice control system for a domestic appliance according to claim 1.

According to the present invention a voice control system for a domestic appliance, particularly for a cooking appliance, is provided, wherein:
- the voice control system comprises at least one microphone for receiving speech signals,
- the voice control system comprises at least one sound recognition device connected to said microphone and provided for recognising and evaluating the speech signals,
- the voice control system comprises at least one control unit for controlling the domestic appliance,
- the voice control system comprises at least one sensor for detecting signals arising from the behaviour of the user, and
- the microphone is activatable or activated by at least one signal from the sensor, if said signal conforms with a behaviour pattern of the user.

The main idea of the present invention is that the microphone is activated, if the user is identified by signals being conform with the behaviour pattern of said user. This concept allows several ways for activating the microphone by the real user. The voice control system of the present invention recognises occurrences in the environment of the user. A vocal input of the user is non-essentially necessary for activating the voice control system. For example, the signals arising from the behaviour of the user relate to the current activity of the user. Further, the signals arising from the behaviour of the user may relate to the incidences in the environment of the user. In both cases, the microphone is activated on the bases of educated guesses that the real user is present.

Preferably, the voice control system comprises at least one door sensor for detecting the opening and closing of a door of a house, an apartment, a kitchen, a cupboard, a refrigerator, a freezer and/or the domestic appliance.

Further, the voice control system may comprise at least one camera and/or optical sensor for observing the room containing the domestic appliance and/or the environment of said room. Moreover, the voice control system may comprise at least one memory for storing information about the user, preferably the behaviour pattern of the user. Particularly, said behaviour pattern of the user may be generated from the signals of the door sensor.

Particularly, the voice control system comprises at least one movement recognition device for evaluating the movement of the user, wherein said movement recognition device is connected to the door sensor. The combination of signals from a plurality of door sensors allows the creation of the behaviour pattern of the user.

Additionally, the movement recognition device may be connected to the camera and/or the optical sensor. The signals from the camera and/or the optical sensor may support the recognition of the movement.

Moreover, the voice control system may comprise at least one image recognition device connected to the camera and/or the optical sensor.

Preferably, the door sensor, the camera and/or optical sensor and the microphone are wirelessly connected to the voice control system. This allows an installation of the voice control system by low complexity.

For example, preferred cooking recipes of the user are stored in the memory of the voice control system.

Further, health data of the user are stored in the memory of the voice control system. This is advantageous, if the user makes a diet and/or has intolerances of some kinds of food.

Moreover, the usual times for breakfast, lunch and supper of the user may be stored in the memory of the voice control system.

Additionally, the voice control system may comprise at least one output device for asking questions to the user, wherein said output device is an optical and/or acoustic output device. This allows a bidirectional dialogue between the voice control system and the user.

Preferably, the voice control system is connected to a voice recognition system, e.g. Alexa, Google Home or the like. This allows an easy acquisition of information by low complexity.

Further, the present invention relates to a domestic appliance, particularly for a cooking appliance, comprising and/or connected to at least one voice control system mentioned above.

At last, the present invention relates to a set of domestic appliances, particularly a set of kitchen appliances, comprising and/or connected to at least one voice control system described above.

Novel and inventive features of the present invention are set forth in the appended claims.

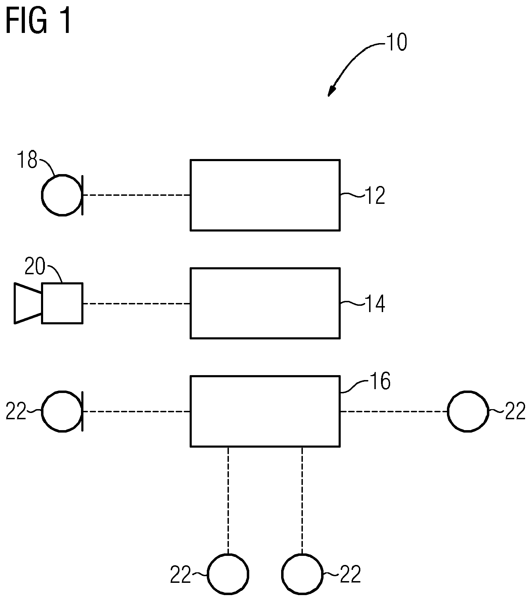

The present invention will be described in further detail with reference to the drawing, in which
FIG 1 illustrates a schematic diagram of a voice control system for a domestic appliance according to a preferred embodiment of the present invention.

FIG 1 illustrates a schematic diagram of a voice control system 10 for a domestic appliance according to a preferred embodiment of the present invention. In this example, the voice control system 10 is provided for at least one cooking appliance. Said cooking appliance may be a cooking oven, a cooking hob, a microwave oven and a steam cooking oven. In general, the voice control system 10 is provided for an arbitrary domestic appliance, e.g. a kitchen hood, a dishwasher, a refrigerator, a freezer, a washing machine and a laundry dryer.

The voice control system 10 comprises a sound recognition device 12, an image recognition device 14 and a movement recognition device 16. Further, the voice control system 10 comprises at least one microphone 18, at least one camera 20 and a plurality of door sensors 22. Moreover, the voice control system 10 comprises at least one control unit for controlling the domestic appliance and at least one memory for storing data. Said control unit is not explicitly shown in FIG 1. Additionally, the voice control system 10 may comprise a WI-FI router and/or a remote server.

The microphone 18 is connected to the sound recognition device 12, preferably by a wireless connection. The camera 20 is connected to the image recognition device 14, preferably by a wireless connection. The door sensors 22 are connected to the movement recognition device 16, preferably by wireless connections.

The microphone 18 is arranged in a room containing the domestic appliance, e.g. in the kitchen. Further microphones 18 may be arranged in the environment of said room. The camera 20 is arranged in the room containing the domestic appliance and/or in the environment of said room.

The door sensors 22 are provided for detecting the opening and closing of doors of a house, an apartment, the kitchen, a cupboard, a refrigerator, a dishwasher and/or the cooking appliance. The schedule of opening and closing said doors provides a behaviour pattern of the user. Said behaviour pattern of the user is stored in the memory of the voice control system 10.

Additionally or alternatively, on the basis of pictures and/or videos detected by the camera 20, the behaviour pattern of the user may be established by the image recognition device 14 and stored in the memory of the voice control system 10.

When door sensors 22 detect several openings and/or closings of doors, then the movement recognition device 16 generates a behaviour pattern. If said behaviour pattern conforms with the user's behaviour pattern stored in the memory of the voice control system 10, then the user is verified and the microphone 18 is activated.

Further, preferred cooking recipes of the user may be stored in the memory of the voice control system 10. The usual times for breakfast, lunch and supper of the user may be also stored in the memory of the voice control system 10.

For example, if the user opens the door of the refrigerator and takes out a pizza, then said opening of the door is detected by the corresponding door sensor 22, while the pizza is identified by the camera 20 or the optical sensor, e.g. a scanner. Next, the voice control system 10 may ask the user, if the pizza should be prepared according to his usual cooking recipe. Preferably, the voice control system 10 asks the user via a loudspeaker. At last, the user may answer "yes" or "no". Additionally, the voice control system 10 may comprise at least one output device for asking question to the user. Said output device may be an optical and/or acoustic output device. This concept allows a bidirectional dialogue between the voice control system and the user.

Preferably, the voice control system 10 is connected to a voice recognition system like Alexa or Google Home. The user can get information, which supports the operation of the domestic appliance. Since the voice recognition system provides fast information, the user saves a lot of time.

The voice control system 10 according to the present invention is also suitable for disabled and/or old persons. The commitment of a guiding person is minimised.

The voice control system 10 of the present invention allows an operation of the domestic appliance, particularly a cooking process with the cooking appliance, which is adapted to the behaviour pattern of the user.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: voice control system
- 12: sound recognition device
- 14: image recognition device
- 16: movement recognition device
- 18: microphone
- 20: camera
- 22: door sensor

## Claims

1. A voice control system (10) for a domestic appliance, particularly for a cooking appliance, wherein:
- the voice control system (10) comprises at least one microphone (18) for receiving speech signals,
- the voice control system (10) comprises at least one sound recognition device (12) connected to said microphone (18) and provided for recognising and evaluating the speech signals,
- the voice control system (10) comprises at least one control unit for controlling the domestic appliance,
- the voice control system (10) comprises at least one sensor (20, 22) for detecting signals arising from the behaviour of the user, and
- the microphone (18) is activatable or activated by at least one signal from the sensor (20, 22), if said signal conforms with a behaviour pattern of the user.

2. The voice control system according to claim 1,
**characterised in that**
the voice control system (10) comprises at least one door sensor (22) for detecting the opening and closing of a door of a house, an apartment, a kitchen, a cupboard, a refrigerator, a freezer and/or the domestic appliance.

3. The voice control system according to claim 1 or 2,
**characterised in that**
the voice control system (10) comprises at least one camera (20) and/or optical sensor for observing the room containing the domestic appliance and/or the environment of said room.

4. The voice control system according to any one of the preceding claims,
**characterised in that**
the voice control system (10) comprises at least one memory for storing information about the user, preferably the behaviour pattern of the user.

5. The voice control system according to any one of the preceding claims,
**characterised in that**
the voice control system (10) comprises at least one movement recognition device (16) for evaluating the movement of the user, wherein said movement recognition device (16) is connected to the door sensor (22).

6. The voice control system according to claim 5 related back to claim 3,
**characterised in that**
the movement recognition device (16) is connected to the camera (20) and/or the optical sensor.

7. The voice control system according to any one of the preceding claims,
**characterised in that**
the voice control system (10) comprises at least one image recognition device (14) connected to the camera (20) and/or the optical sensor.

8. The voice control system according to claim 5,
**characterised in that**
the door sensor (22), the camera (18) and/or optical sensor and the microphone are wirelessly connected to the voice control system (10).

9. The voice control system according to any one of the claims 4 to 8,
**characterised in that**
preferred cooking recipes of the user are stored in the memory of the voice control system (10).

10. The voice control system according to any one of the claims 4 to 9,
**characterised in that**
health data of the user are stored in the memory of the voice control system (10).

11. The voice control system according to any one of the claims 4 to 10,
**characterised in that**
the times for breakfast, lunch and supper of the user are stored in the memory of the voice control system (10).

12. The voice control system according to any one of the preceding claims,
**characterised in that**
the voice control system (10) comprises at least one output device for asking questions to the user, wherein said output device is an optical and/or acoustic output device.

13. The voice control system according to any one of the preceding claims,
**characterised in that**
the voice control system (10) is connected to a voice recognition system, e.g. Alexa, Google Home or the like.

14. A domestic appliance, particularly a cooking appliance,
**characterised in that**
the domestic appliance comprises and/or is connected to at least one voice control system (10) according to any one of the preceding claims.

15. A set of domestic appliances, particularly a set of kitchen appliances,
**characterised in that**
the set of domestic appliances comprises and/or is connected to at least one voice control system (10) according to any one of the claims 1 to 13.
